Europäisches Patentamt

European Patent Office

Office européen des brevets

(11) Veröffentlichungsnummer: **0 149 072**
**B1**

# (12) EUROPÄISCHE PATENTSCHRIFT

(45) Veröffentlichungstag der Patentschrift:
24.05.89

(51) Int. Cl.⁴: **B 65 H 75/40, H 02 G 11/02**

(21) Anmeldenummer: **84114365.4**

(22) Anmeldetag: **28.11.84**

(54) **Tragbare Kabeltrommel.**

(30) Priorität: **13.01.84 DE 3401026**

(43) Veröffentlichungstag der Anmeldung:
**24.07.85 Patentblatt 85/30**

(45) Bekanntmachung des Hinweises auf die Patenterteilung:
**24.05.89 Patentblatt 89/21**

(84) Benannte Vertragsstaaten:
**AT BE CH FR GB LI LU NL**

(56) Entgegenhaltungen:
**DE-U- 7 425 896**
**FR-A- 2 107 773**
**GB-A- 824 475**
**GB-A- 966 726**
**US-A- 3 983 977**

(73) Patentinhaber: **Hugo Brennenstuhl GmbH & Co. KG,
Seestrasse 1 - 3, D-7400 Tübingen - 9 (Pfrondorf) (DE)**

(72) Erfinder: **Brennenstuhl, Hugo, Albstrasse 24,
D-7400 Tübingen 9 (Pfrondorf) (DE)**

(74) Vertreter: **Reimold, Otto, Dr. Dipl.-Phys. et al,
Patentanwälte Dipl.-Ing. R. Magenbauer Dipl.-Phys. Dr.
O. Reimold Hölderlinweg 58, D-7300 Esslingen (DE)**

## Beschreibung

Die Erfindung betrifft eine tragbare Kabeltrommel zum Aufwickeln eines elektrischen Verlängerungskabels, mit einem Trommelkörper, der einen das Kabel aufnehmenden Wickelraum seitlich begrenzende Flansche aufweist und an einem Tag- und Standgestell drehbar gelagert ist, das eine sich der kegeligen Außenseite eines der Flansche entlang in radialer Richtung erstreckende Rohrpartie enthält, die eine in ihrer unwirksamen Stellung mit Abstand zur Flanschaußenseite angeordnete und in ihrer wirksamen Stellung mit dieser in Bremseingriff stehende Bremseinrichtung trägt.

Um beim Auf- und Abwickeln des Kabels einen unnötigen Kraftaufwand zu vermeiden, ist der Trommelkörper regelmäßig leichtgängig drehbar gelagert. Diese leichte Drehbarkeit hat jedoch zur Folge, daß sich beim Abziehen des Kabels der Trommelkörper noch weiter dreht, wenn die gewünschte Kabellänge abgezogen ist. Dies sowie ein unabsichtliches Drehen des Trommelkörpers und damit verbundenes Abwickeln des Kabels beim Nichtgebrauch der Kabeltrommel ist unerwünscht.

Um hier Abhilfe zu schaffen, ist bei einer aus dem DE-GM 7 425 896 bekannten Kabeltrommel eine Bremsschraube als Bremseinrichtung vorhanden, die axial hin- und herschraubbar ist.

Das Verdrehen der Bremsschraube ist verhältnismäßig umständlich. Vor allem aber läßt sich die auf den Trommelkörper einwirkende Bremskraft nur schlecht dosieren, insbesondere beim Abziehen des Kabels, da hierbei zum einen ein freies Drehen des Trommelkörpers und zum anderen eine zu starke Bremskraft, entgegen der man am Kabel ziehen muß, vermieden werden sollte.

Der vorliegenden Erfindung liegt deshalb die Aufgabe zugrunde, eine Kabeltrommel der eingangs genannten Art zu schaffen, deren Bremseinrichtung einfach in der Handhabung und dabei mühelos auf die jeweils gewünschte Bremskraft einstellbar ist.

Diese Aufgabe wird erfindungsgemäß dadurch gelöst, daß die Rohrpartie mit der Flanschaußenseite einen Keilspalt bildet und daß die Bremseinrichtung von einem in Rohrlängsrichtung zwischen seiner wirksamen und seiner unwirksamen Stellung verschiebbar an der Rohrpartie angeordneten Bremsschieber mit einem der Flanschaußenseite zugewandten Bremsteil gebildet wird.

Zum Verstellen der Bremswirkung wird also lediglich der Bremsschieber längs der Rohrpartie verschoben, wobei sich der Abstand zwischen dem Bremsteil und der Flanschaußenseite verändert, so daß zwischen der den Trommelkörper freigebenden unwirksamen Stellung und zwischen der den Trommelkörper blockierenden wirksamen Stellung beliebige Zwischenstellungen möglich sind, in denen der Bremsteil mehr oder weniger fest an der Flanschaußenseite anliegt.

Vorteilhaft ist ferner, daß der Bremsteil nicht stets im gleichen Radius am Trommelkörper angreift, was den Verschleiß an der Flanschaußenseite mindert. Des weiteren ist im Unterschied zu der bekannten Kabeltrommel von außen her sichtbar, in welcher Stellung sich die Bremseinrichtung befindet. Schließlich muß an der Rohrpartie auch keine Gewindehülse od. dgl. angebracht werden, so daß man ein unverändertes Trag- und Standgestell verwenden kann, auf dessen radiale Rohrpartie der Bremsschieber einfach aufgesetzt wird.

Zweckmäßigerweise weist der Bremsschieber eine elastisch aufweitbare Schiebehülse auf, die an der dem Trommelkörper abgewandten Seite geschlitzt und auf die Rohrpartie aufgesteckt ist. Ein solcher Bremsschieber kann einfach durch Aufclipsen an der Rohrpartie befestigt werden. Außerdem drücken die beiden Schiebehülsenhälften gegen die Rohrpartie, so daß sich eine den Bremsschieber in jeder Stellung selbsttätig haltende Klemmkraft ergibt. Da die Schiebehülse an der dem Trommelkörper abgewandten Seite geschlitzt ist, kann der Bremsschieber in seiner wirksamen Stellung nicht unabsichtlich von der Rohrpartie weggerissen werden, wenn man auf den blockierten Trommelkörper beispielsweise mittels des Kabels ein Drehmoment ausübt.

Eine weitere zweckmäßige Maßnahme besteht darin, daß sich der Bremsteil quer zur Rohrpartie erstreckt. Dabei kann der Bremsteil leistenähnlich in tangentialer Richtung des Trommelkörpers verlaufen. Auf diese Weise ist die Längsrichtung des Bremsteils der vom Trommelkörper auf den Bremsteil ausgeübten Kraft gleich gerichtet wodurch Rattererscheinungen beim Abziehen des Kabels von der gebremsten Kabeltrommel vermieden werden. Außerdem kann sich der Bremsschieber nicht unabsichtlich auf der Rohrpartie verdrehen.

Eine besonders einfache und billige Herstellung ergibt sich dann, wenn der Bremsschieber einstückig aus Kunststoff besteht.

Es ist des weiteren vorteilhaft, daß der Bremsteil eine der Flanschaußenseite entsprechend abgerundet verlaufende Bremskante aufweist, damit sich diese über ihre gesamte Länge gegen die Flanschaußenseite legen kann.

Bei einer bekannten Kabeltrommel weist der Trommelkörper einen die Flansche tragenden Trommelkern mit einer durchgehenden Lagerbohrung für das Lagerende des aus rohrförmigem Material bestehenden Trag- und Standgestells auf, an dem der Trommelkern in axialer Richtung festgelegt drehbar gelagert ist, wobei an der dem Gestell entgegengesetzten Seite des Trommelkerns ein die elektrischen Anschlußteile aufnehmender Aufnahmeraum angeordnet ist. Bei dieser Kabeltrommel ist das Gestell im Bereich seines Lagerendes zweiteilig ausgebildet, indem ein Rohrstück kleineren Durchmessers in das Gestellrohr eingesteckt und fixiert ist. Die auf diese Weise durch die Stirnseite des Gestellrohrs gebildete Stufe stellt einen axialen Anschlag für den auf das Rohrstück kleineren Durchmessers aufgesteckten Trommelkörper dar. An der entgegengesetzten Seite ragt das Rohrstück kleineren Durchmessers über die Lagerbohrung des Trommelkerns vor, wobei auf das vorstehende Ende eine den Trommelkörper in der anderen axialen Richtung sichernde Federscheibe aufgebracht und außerdem eine Abdeckkappe aufgesteckt ist, die aus Sicherheitsgründen vorhanden sein muß, damit keine im benachbarten Aufnahmeraum untergebrachten und unter elektrischer Spannung stehenden Teile ungewollt mit dem metallischen Rohrstück und somit mit dem Trag- und Standgestell in Berührung kommen können.

Diese aus verhältnismäßig vielen Einzelteilen bestehende Anordnung ist sowohl materialmäßig als auch in der Montage aufwendig. Ferner besteht die Gefahr, daß bei der Kabeltrommelfertigung die Abdeckkappe weggelassen wird, was lebensgefährlich sein kann. Des weiteren beengt das die Federscheibe und die Abdeckkappe tragende, überstehende Ende des Rohrstücks den Aufnahmeraum.

Daher besteht eine weitere zweckmäßige Ausgestaltung der erfindungsgemäßen Kabeltrommel darin, daß das einstückige, mit gleichbleibendem Durchmesser in die Lagerbohrung eintretende und in dieser endende Lagerende des Gestells mit seiner Stirnseite an einem radialen Ringabsatz der Lagerbohrung anliegt und daß von der entgegengesetzten Seite des Trommelkerns her durch die sich an den Ringabsatz anschließende verjüngte Partie der Lagerbohrung ein aus Kunststoff bestehender Sicherungsstopfen mit seiner Stopfenpartie, deren Außendurchmesser dem Innendurchmesser des Lagerendes entspricht, in die Stirnseite des Lagerendes eingreift, wobei die radial vorstehende Kopfpartie des Sicherungsstopfens am Rand der Lagerbohrung in axialer Richtung anliegt und die Lagerbohrung zum Aufnahmeraum hin abdeckt. Auf diese Weise ist der Trommelkörper auf einfache und billige Weise gelagert. Es handelt sich um ein Lagerende, das in unveränderter Weise von dem Rohrmaterial des Trag- und Standgestells gebildet wird. Die Ausbildung eines Radialvorsprungs am Lagerende zur axialen Fixierung des Trommelkörpers in der einen Richtung, sei es – wie geschildert – durch Einsetzen eines Rohrstücks kleineren Durchmessers oder durch Anbringen einer Ausprägung od.dgl., entfällt. Gestellseitig ist somit zur Lagerung des Trommelkörpers keine Maßnahme erforderlich, abgesehen von dem Anordnen des Lagerendes an sich. Ferner bringt das Anordnen des Ringabsatzes in der Lagerbohrung keinen zusätzlichen Fertigungsaufwand mit sich, da er sich bei der Herstellung des aus Kunststoff bestehenden Trommelkörpers ohne weiteres anformen läßt, so daß man zum Gestell hin auf denkbar einfachste Weise einen Axialanschlag erhält. Zusätzlich zum Lagerende ist als einziges weiteres Teil der Sicherungsstopfen vorhanden, der zweckmäßigerweise durch festes Einpressen mit dem Lagerende verbunden ist und dessen Kopfpartie einen in der anderen axialen Richtung wirksamen Anschlag für den Trommelkörper bildet. Dieser Sicherungsstopfen dient gleichzeitig als Isolierabdeckung zum Aufnahmeraum hin. Wegen seiner Befestigungsfunktion kann der Sicherungsstopfen nicht vergessen werden, so daß das Gestell nicht unabsichtlich unter Spannung stehen kann. Da das Lagerende innerhalb des Trommelkerns endet und die Kopfpartie des Sicherungsstopfens nur eine sehr geringe Axialerstreckung besitzen muß, ergibt sich außerdem keine Beengung des Aufnahmeraums.

Zweckmäßigerweise entspricht die radiale Abmessung des Ringabsatzes der Wandstärke des Lagerendes des Gestells. Auf diese Weise bildet die Wand der verjüngten Partie der Lagerbohrung mit der Innenwand des Lagerendes eine durchgehende Wandung, so daß man eine in axialer Richtung über den ganzen Trommelkern durchgehende Lagerung erhält, indem nicht nur die Partie größeren Durchmessers der Lagerbohrung auf dem Lagerende sondern auch die verjüngte Partie der Lagerbohrung auf dem sie durchdringenden Abschnitt der Stopfenpartie des Sicherungsstopfens drehbar sitzt.

Eine weitere zweckmäßige Maßnahme besteht darin, daß die dem Gestell entgegengesetzte Seite des Trommelkerns an der Mündung der Lagerbohrung eine Vertiefung besitzt, in der die Kopfpartie des Sicherungsstopfens mindestens teilweise angeordnet ist. Somit kann die Kopfpartie ganz oder teilweise in den Boden des Aufnahmeraums eingelassen sein, was platzmäßig besonders günstig ist.

Ein Ausführungsbeispiel der Erfindung wird nun anhand der Zeichnung beschrieben. Es zeigen:

Fig. 1 die Seitenansicht einer Kabeltrommel, wobei der Trommelkörper im Längsmittelschnitt gezeigt ist,

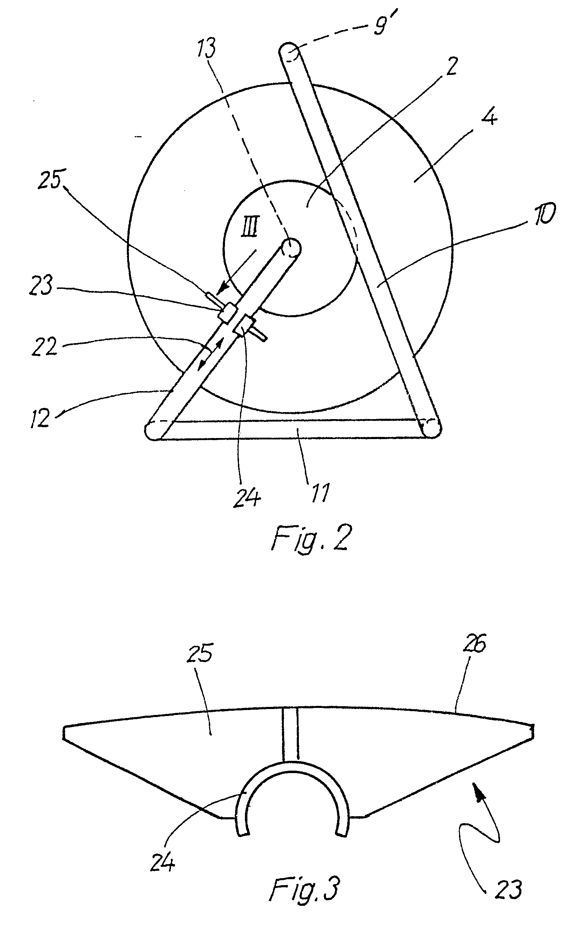

Fig. 2 die Kabeltrommel nach Fig. 1 in Stirnansicht vom Trag- und Standgestell her in Richtung gemäß Pfeil II in Fig. 1 gesehen und

Fig. 3 einen bei der Kabeltrommel nach den Fig. 1 und 2 verwendeten Bremsschieber in gesonderter Darstellung in Draufsicht gemäß Pfeil III in Fig. 2.

Die in der Zeichnung dargestellte tragbare Kabeltrommel dient zum Aufwickeln eines elektrischen Verlängerungskabels, das mit seinem freien Ende an eine ortsfeste Steckdose anschließbar ist und andernends an der Kabeltrommel zu einer oder mehreren an dieser sitzenden Steckdosen führt, so daß die Kabeltrommel eine ortsveränderliche Spannungsquelle bildet, die zu einem Arbeitsplatz getragen werden kann.

Die Kabeltrommel enthält einen aus Isoliergründen aus Kunststoff bestehenden Trommelkörper 1, der sich aus einem zylindrischen Trommelkern 2 und einstückig an diesen angeformten Flanschen 3, 4 ringförmiger Gestalt zusammensetzt. Diese Flansche 3, 4 sind an den axialen Enden des Trommelkerns 2 angeordnet und stehen im wesentlichen radial ab, wobei sie leicht kegelig nach axial außen gestellt sind. Sie bilden eine seitliche Begrenzung für den Wickelraum 5, der radial innen von der Umfangsfläche des Trommelkerns 2 begrenzt wird. In diesem Wickelraum 5 ist das nicht dargestellte Verlängerungskabel auf den Trommelkern in üblicher Weise aufgewickelt. Das innere Einde des Verlängerungskabels wird durch eine Radialbohrung 6 in einen Aufnahmeraum 7 des Trommelkerns 2 geführt und dort zur Zugentlastung festgelegt. Der Aufnahmeraum 7 ist an der einem noch zu beschreibenden Trag- und Standgestell 8 entgegengesetzten Seite des Trommelkerns 2 angeordnet und wird beim Ausführungsbeispiel von einer im wesentlichen zylindrischen Stirnausnehmung gebildet, die die elektrischen Anschlußteile aufnimmt. Diese sitzen an einem gestrichelt angedeuteten Einsatzkörper 9, der außenseitig eine oder mehrere Steckdosen und ggf. einen elektrischen Schalter usw. besitzen kann. All dies sowie das Anschließen des zugewandten Endes des Verlängerungskabels an den Einsatzkörper 9 ist bekannt, so daß hierauf nicht weiter eingegangen zu werden braucht.

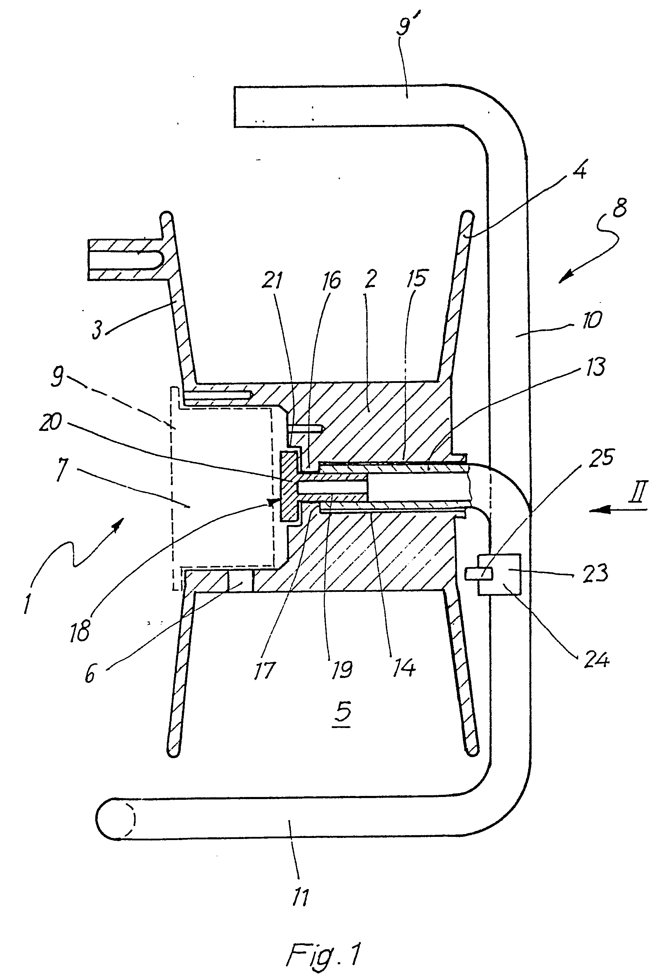

Ferner weist die Kabeltrommel das schon erwähnte Trag- und Standgestell 8 auf, das aus rohrförmigem Material besteht und an dem der Trommelkörper seitlich befestigt ist. Beim Ausführungsbeispiel handelt es sich um ein einstückig aus Metallrohr gebogenes Gestell 8. Dieses weist einen vom einen Endbereich des Rohres gebildeten Handgriff 9' auf, der sich oberhalb des Trommelkörpers 2 parallel zu dessen axialer Richtung über diesen erstreckt. Von dieser Handgriffpartie 9' geht eine Verbindungspartie 10 rechtwinkelig zum Trommelkörper 1 hin ab, die der zgewandten Seite des Trommelkörpers vorgelagert ist und dieser entlang in Sekantenrichtung nach unten verläuft, wo sie den Trommelkörper überragt. An diese Verbindungspartie 10 ist eine rechtwinkelig zu ihr stehende und parallel zur Handgriffpartie 9' gerichtete U-förmige Partie 11 angebogen, die unterhalb des Trommelkörpers 2 liegt und als Standfläche dient. Vom anderen Ende der U-Partie 11 ist dann eine in Seitenansicht (Fig. 1) in der Ebene der Verbindungspartie 10 verlaufende, sich in radialer Richtung des Trommelkörpers 2 erstreckende radiale Rohrpartie 12 rechtwinkelig abgebogen, die am Zentrum des Trommelkörpers 1 endigt. Auf diese radiale Rohrpartie 12 folgt dann schließlich als Lagerende des Gestells eine rechtwinkelig zum Trommelkörper hin abgebogene Lagerpartie 13.

Diesem Lagerende 13 ist eine am Trommelkern 2 durchgehend ausgebildete Lagerbohrung 14 zugeordnet. Diese Lagerbohrung 14 setzt sich aus dem Gestell 8 zugewandten Partie 15 größeren Durchmessers und aus einer sich an diese zum Aufnahmeraum 7 hin anschließende Partie 16 kleineren Durchmessers zusammen, die sich über einen radialen Ringabsatz 17 an die Partie 15 anschließt.

Der Trommelkern 2 ist in axialer Richtung festgelegt drehbar an dem Gestell 8 gelagert, indem das Lagerende 13 des Gestells 8 in die Partie 15 grösseren Durchmessers der Lagerbohrung 14 bis zum Ringabsatz 17 mit Drehspiel eingesteckt ist. Das einstückige und mit gleichbleibendem Durchmesser in die Lagerbohrung eintretende und in dieser endigende Lagerende 13 liegt also mit seiner Stirnseite am Ringabsatz 17 an, so daß ein zum Gestell 8 hin wirksamer Anschlag gebildet wird. Von der entgegengesetzten Seite des Trommelkerns 2 her greift durch die verjüngte Partie 16 der Lagerbohrung ein aus Kunststoff bestehender Sicherungsstopfen 18 mit seiner Stopfenpartie 19, deren Außendurchmesser dem Innendurchmesser des Lagerendes 13 entspricht, in die Stirnseite des Lagerendes ein. Die radial vorstehende Kopfpartie 20 des Sicherungsstopfens 18 liegt am Rand der Lagerbohrung in axialer Richtung an, so daß diese Kopfpartie 20 einen zweiten Axialanschlag für den Trommelkörper bildet, der zusammen mit der Stirnseite des Lagerendes 13 den Trommelkörper in beiden axialen Richtungen gegen Verschieben sichert. Die Stopfenpartie 19 ist in das Lagerende 13 eingepreßt, so daß ein genügend fester Zusammenhalt gewährleistet ist. Es versteht sich, daß die Stirnseite des Lagerendes 13 und die Kopfpartie 20 des Sicherungsstopfens 18 mit einem das Drehen des Trommelkörpers nicht behindernden Spiel am Trommelkern in axialer Richtung anliegen.

Der Kopfpartie 20 kommt noch die weitere Funktion zu, daß sie die Lagerbohrung 14 zum Aufnahmeraum 7 hin abdeckt. Hierdurch wird mit Sicherheit vermieden, daß ein sich unabsichtlich lösendes, unter Spannung stehendes Teil im Aufnahmeraum 7 mit dem Lagerende 13 und somit mit dem Gestell 8 in Berührung kommen kann.

Wie aus Fig. 1 ersichtlich ist, entspricht die radiale Abmessung des Ringabsatzes 17 der Wandstärke des Lagerendes 13, so daß die Innenwand des Lagerendes zusammen mit der Innenwand der verjüngten Bohrungspartie 16 eine durchgehende Wandung bildet und der Bereich der Stopfenpartie 19, die die verjüngte Bohrungspartie 16 durchdringt, ebenfalls zur Lagerung des Trommelkörpers beiträgt.

Es versteht sich, daß das Trag- und Standgestell 8 im einzelnen auch anders als beschrieben ausgebildet sein kann. Wesentlich ist jedoch, daß die geschilderte Lagerung keine Abänderung bzw. keine spezielle Anpassung des Lagerendes an die Lagerfunktion erforderlich macht.

Die dem Gestell 8 entgegengesetzte Seite des Trommelkerns 2 besitzt an der Mündung der Lagerbohrung 13, wo also der Sicherungsstopfen in diese eintritt, noch eine Vertiefung 21, innerhalb der die Kopfpartie 20 beim Ausführungsbeispiel teilweise angeordnet ist. Hierdurch wird der im Aufnahmeraum 7 zur Verfügung stehende Platz vergrößert, wobei man die Kopfpartie 20 bei entsprechender Wahl der Abmessung der Vertiefung und/oder der Kopfpartie ganz in die Vertiefung 21 einlassen kann.

Dem Trommelkörper 1 ist des weiteren eine Bremseinrichtung zugeordnet, die je nach ihrer Stellung ein ungehindertes Drehen des Trommelkörpers zuläßt, die Drehgeschwindigkeit bremst oder ein Drehen des Trommelkörpers so stark behindert, daß ein unabsichtliches Abwickeln des Verlängerungskabels vermieden wird. Hierzu sitzt auf der radialen Rohrpartie 12 des Gestells 8, die sich entlang der kegelig vom Trommelkern 2 abstehenden Außenseite des zugewandten Flansches 4 erstreckt, ein in Rohrlängsrichtung gemäß Doppelpfeil 22 verschiebbarer Bremsschieber 23. Dieser ist in seiner dem Trommelkern 2 zugewandten unwirksamen Stellung (Fig. 1) mit axialem Abstand zum Trommelkörper angeordnet, so daß dieser frei ist, während er in der dem Trommelkern 2 abgewandten wirksamen Stellung, wenn er radial nach außen verschoben ist, mit der kegeligen Außenseite des Flansches 4 in Bremseingriff steht. Dabei legt sich der Bremsschieber mit zunehmendem Abstand vom Trommelzentrum fester gegen den Flansch 4, so daß die Bremskraft gut dosiert werden kann. Dies ist darauf zurückzuführen, daß der Zwischenraum zwischen der radialen Rohrpartie 12 und der Außenseite des Flansches 4 ein sich nach radial außen hin verjüngender Keilspalt ist.

Beim Ausführungsbeispiel besteht der Bremsschieber 23 einstückig aus Kunststoff und er besitzt eine elastisch aufweitbare Schiebehülse 24, die an der dem Trommelkörper abgewandten Seite geschlitzt und auf die radiale Rohrpartie 12 aufgesteckt ist. Dies erfolgt durch elastisches Aufspreizen der Schiebehülse. An diese ist ein sich quer zur radialen Rohrpartie 12 erstreckender Bremsteil 25 angeformt, der sich leistenähnlich in tangentialer Richtung des Trommelkörpers erstreckt und eine lineare oder zweckmäßiger eine leicht abgerundete Bremskante 26 aufweist, damit sie sich über ihre gesamte Länge gegen die Flanschaußenseite legen kann.

**Patentansprüche**

1. Tragbare Kabeltrommel zum Aufwickeln eines elektrischen Verlängerungskabels, mit einem Trommelkörper (1), der einen das Kabel aufnehmenden Wickelraum (5) seitlich begrenzende Flansche (3, 4) aufweist und an einem Trag- und Standgestell (8) drehbar gelagert ist, das eine sich der kegeligen Außenseite eines der Flansche (3, 4) entlang in radialer Richtung erstreckende Rohrpartie (12) enthält, die eine in ihrer unwirksamen Stellung mit Abstand zur Flanschaußenseite angeordnete und in ihrer wirksamen Stellung mit dieser in Bremseingriff stehende Bremseinrichtung trägt, dadurch gekennzeichnet, daß die Rohrpartie (12) mit der Flanschaußenseite einen Keilspalt bildet und daß die Bremseinrichtung von einem in Rohrlängsrichtung zwischen seiner wirksamen und seiner unwirksamen Stellung verschiebbar an der Rohrpartie (12) angeordneten Bremsschieber (23) mit einem der Flanschaußenseite zugewandten Bremsteil (25) gebildet wird.

2. Kabeltrommel nach Anspruch 1, dadurch gekennzeichnet, daß der Bremsschieber (23) eine elastisch aufweitbare Schiebehülse (24) aufweist, die an der dem Trommelkörper (1) abgewandten Seite geschlitzt und auf die Rohrpartie (12) aufgesteckt ist.

3. Kabeltrommel nach Anspruch 1 oder 2, dadurch gekennzeichnet, daß sich der Bremsteil (25) quer zur Rohrpartie erstreckt.

4. Kabeltrommel nach Anspruch 3, dadurch gekennzeichnet, daß der Bremsteil (25) leistenähnlich in tangentialer Richtung des Trommelkörpers (1) verläuft.

5. Kabeltrommel nach einem der Ansprüche 1 bis 4, dadurch gekennzeichnet, daß der Bremsschieber (23) einstückig aus Kunststoff besteht.

6. Kabeltrommel nach einem der Ansprüche 1–5, dadurch gekennzeichnet, daß der Bremsteil (25) eine der Flanschaußenseite entsprechend abgerundet verlaufende Bremskante (26) aufweist.

7. Kabeltrommel nach einem der Ansprüche 1–6, bei der der Trommelkörper (1) einen die Flansche (3, 4) tragenden Trommelkern (2) mit einer durchgehenden Lagerbohrung (14) für das Lagerende (13) des aus rohrförmigem Material bestehenden Trag- und Standgestells (8) aufweist, an dem der Trommelkern (2) in axialer Richtung festgelegt drehbar gelagert ist, wobei an der dem Gestell (8) entgegengesetzten Seite des Trommelkerns (2) ein die elektrischen Anschlußteile aufnehmender Aufnahmeraum (7) angeordnet ist, dadurch gekennzeichnet, daß das einstückige, mit gleichbleibendem Durchmesser in die Lagerbohrung (14) eintretende und in dieser endende Lagerende (13) des Gestells (8) mit seiner Stirnseite an einem radialen Ringabsatz (17) der Lagerbohrung (14) anliegt und daß von der entgegengesetzten Seite des Trommelkerns (2) her durch die sich an den Ringabsatz (17) anschließende verjüngte Partie (16) der Lagerbohrung (14) ein aus Kunststoff bestehender Sicherungsstopfen (18) mit seiner Stopfenpartie (19), deren Außendurchmesser dem Innendurchmesser des Lagerendes entspricht, in die Stirnseite des Lagerendes (13) eingreift, wobei die radial vorstehende Kopfpartie (20) des Sicherungsstopfens (18) am Rand der Lagerbohrung (14) in axialer Richtung anliegt und die Lagerbohrung (14) zum Aufnahmeraum (7) hin abdeckt.

8. Kabeltrommel nach Anspruch 7, dadurch gekennzeichnet, daß die radiale Abmessung des Ringabsatzes (17) der Wandstärke des Lagerendes (13) des Gestells (8) entspricht.

9. Kabeltrommel nach Anspruch 7 oder 8, dadurch gekennzeichnet, daß die dem Gestell (8) entgegengesetzte Seite des Trommelkerns (2) an der Mündung der Lagerbohrung (14) eine Vertiefung (21) besitzt, in der die Kopfpartie (20) des Sicherungsstopfens (18) mindestens teilweise angeordnet ist.

**Claims**

1. Portable cable reel for winding an electrical extension cable, with a reel body (1) which has a flange (3, 4) at the side of the space (5) where the cable is wound, and is rotatably mounted on a portable stand (8); it has a tubular section (12) extending radially along the tapering outer side of one of the flanges (3, 4), and carrying a braking device arranged at a distance from the outside of the flange in the inoperative position, and in braking contact with it in the operative position, characterized in that the tubular section (12) and the outside of the flange together form a wedge-shaped gap, and that the braking device is formed by a brake slide (23) fitted to the tubular section (12) so as to be movable in the tube longitudinal direction between its operative and inoperative positions, with a braking element (25) facing the outside of the flange.

2. Cable reel as described in claim 1, characterized in that the brake slide (23) has a flexibly expandable sliding sleeve (24), slotted on the side facing away from the reel body (1), and slipped over the tubular section (12).

3. Cable reel as described in claims 1 or 2, characterized in that the braking element (25) extends at right-angles to the tubular section.

4. Cable reel as described in claim 3, characterized in that the braking element runs in strip-fashion in the tangential direction of the reel body (1).

5. Cable reel as described in any of claims 1 to 4, characterized in that the brake slide (23) is made of plastic, in one piece.

6. Cable reel as described in any of claims 1 to 5, characterized in that the braking element (25) has a rounded braking edge (26) matching the outside of the flange.

7. Cable reel as described in any of claims 1 to 6, in which the reel body (1) has a reel core (2) carrying the flanges (3, 4), with a through bearing bore (14) for the bearing end (13) of the portable stand (8) of tubular material, on which the reel core (2) is rotatably mounted, while being fixed in the axial direction, with a space (7) to accommodate the electrical connectors on that side of the reel core (2) opposite the stand (8), characterized in that the one-piece bearing end (13) of the stand (8) which enters and terminates with uniform diameter in the bearing bore (14), fits with its end face against a radial annular step (17) of the bearing bore (14), and that from the opposite side of the reel core (2), through the tapering section (16) of the bearing bore (14) adjoining the annular step (17), a plastic securing plug (18) engages with the end face of the bearing end (13) with its plug section (19), the external diameter of which coincides with the internal diameter of the bearing end, with the radially projecting head section (20) of the securing plug (18) fitting against the edge of the bearing bore (14) in the axial direction and covering the bearing bore (14) towards the accommodation space (7).

8. Cable reel as described in claim 7, characterized in that the radial dimension of the annular step (17) coincides with the wall thickness of the bearing end (13) of the stand (8).

9. Cable reel as described in claims 7 or 8, characterized in that the side of the reel core (2) opposite the stand (8) has a recess (21) at the mouth of the bearing bore (14), in which the head section (20) of the securing plug (18) can be at least partially fitted.

**Revendications**

1. Tambour de câble portatif pour l'enroulement d'un câble électrique de prolongement comprenant un corps de tambour (1) qui présente des joues (3, 4) limitant latéralement un espace (5) destiné à recevoir les spires du câble et qui est monté tournant sur une structure (8) de portage et de support comportant une portion de tube (12) qui s'étend en direction radiale le long de la face extérieure conique de l'une des joues (3, 4) et qui porte un dispositif de freinage, lequel est disposé à distance de la face extérieure de la joue quand il est en position inactive, et se trouve en prise de freinage avec celle-ci quand il est en position active, caractérisé par le fait que la portion de tube (12) constitue avec la face extérieure de la joue un intervalle en forme de coin, et par le fait que le dispositif de freinage est constitué par un curseur de freinage (23) qui est monté sur la portion de tube (12) en pouvant être déplacé dans la direction longitudinale du tube entre sa position active et sa position inactive, et qui comprend une pièce de freinage (25) tournée vers la face extérieure de la joue.

2. Tambour de câble selon la revendication 1, caractérisé par le fait que le curseur de freinage (23) comporte un manchon coulissant (24) qui peut être élargi élastiquement, qui est fendu sur son côté tourné vers le corps de tambour (1) et qui est passé sur la portion de tube (12).

3. Tambour de câble selon la revendication 1 ou 2, caractérisé par le fait que la pièce de freinage (25) s'étend perpendiculairement à la portion de tube.

4. Tambour de câble selon la revendication 3, caractérisé par le fait que la pièce de freinage (25) s'étend à la manière d'une baguette dans la direction tangentielle du corps de tambour (1).

5. Tambour de câble selon l'une des revendications 1 à 4, caractérisé par le fait que le curseur de freinage (23) se compose d'une seule pièce en matière plastique.

6. Tambour de câble selon l'une des revendications 1 à 5, caractérisé par le fait que la pièce de freinage (25) présente un bord de freinage (26) qui est arrondi en correspondance avec la face extérieure de la joue.

7. Tambour de câble selon l'une des revendications 1 à 6, dans lequel le corps de tambour (1) comprend un noyau (2) portant les joues (3, 4) et comprenant un perçage de part en part (14) qui sert de palier pour l'extrémité (13) de la structure de portage et de support (8) composée d'un matériau en tube, sur laquelle le noyau (2) du tambour est monté fixe en direction axiale, mais en pouvant tourner, un réceptacle (7) recevant les organes de raccordement électrique étant disposé sur le côté du noyau (2) du tambour qui est opposé à la structure (8), caractérisé par le fait que l'extrémité (13) de la structure (8) qui sert d'arbre de palier et qui est réalisée en une seule pièce, pénètre avec un diamètre constant dans le perçage (14) servant de palier, se termine dans celui-ci, et s'appuie par son côté frontal sur un épaulement radial (17) du perçage (14) qui sert de palier, et par le fait qu'un bouchon d'arrêt (18) en matière plastique vient en prise dans le côté frontal de l'extrémité servant d'arbre de palier (13) par sa partie de bouchage (19), dont le diamètre extérieur correspond au diamètre intérieur de cette extrémité servant d'arbre de palier, et ce, depuis le côté opposé du noyau (2) du tambour et à travers la partie rétrécie (16) du perçage servant de palier (14) qui se raccorde à l'épaulement annulaire (17), la tête (20) radialement en saillie du bouchon d'arrêt (18) reposant en direction axiale sur le bord du perçage servant de palier (14) et fermant ce perçage servant de palier (14) par rapport au réceptacle (7).

8. Tambour de câble selon la revendication 7, caractérisé par le fait que la dimension radiale de l'épaulement annulaire (17) correspond à l'épaisseur de la paroi de l'extrémité servant d'arbre de palier (13) de la structure (8).

9. Tambour de câble selon la revendication 7 ou 8, caractérisé par le fait que le côté du noyau (2) du tambour qui est opposé à la structure (8) comporte à l'embouchure du perçage servant de palier (14) un évidement (21) dans lequel est disposée au moins partiellement la tête (20) du bouchon d'arrêt (18).

9'

4

8

21  16  2  15

3

9

10

13

20

7

25

II

1

23

18

24

6

17  19  14

5

11

Fig.1

Fig. 2

Fig.3